# EUROPÄISCHE PATENTANMELDUNG

(11) **EP 3 214 225 A1**
(43) Veröffentlichungstag der Anmeldung: **06.09.2017**
(21) Anmeldenummer: 16158278.8
(22) Anmeldetag: 02.03.2016
(51) Int. Cl.: E02B 8/08

(54) **VORRICHTUNG ZUR WANDERUNG VON WASSERTIEREN AN BARRIEREN IN GEWÄSSERN**

(71) Anmelder: MVM Holding GmbH, 1010 Wien (AT); flusslauf Ingenieurbüro für Gewässerökologie und Wasserbau e.U., 8010 Graz (AT)
(72) Erfinder: Marth, Christian, 1230 Wien (AT); Seidl, Georg, 8010 Graz (AT)
(74) Vertreter: Margotti, Herwig Franz

(57) **Zusammenfassung**

Vorrichtung (1, 10) zur Wanderung von Wassertieren (20) über eine Barriere (3). Die Vorrichtung (1, 10) weist zumindest einen Gerinnekörper (6) mit einem oberwasserseitigen Ende (18), das mit dem Oberwasser (5) kommuniziert, und einem unterwasserseitigen Ende (17), das mit dem Unterwasser (4) kommuniziert auf, wodurch Wasser vom Oberwasser (5) durch den Gerinnekörper (6) in das Unterwasser (4) fließt. Im Gerinnekörper (6) sind plattenförmige Lamellen (7, 70) quer zu einer Längsachse (19) des Gerinnekörpers (6) angeordnet, wobei die Lamellen (7, 70) vorzugsweise zusätzlich schräg zum oberwasserseitigen oberseitigen Ende (18) des Gerinnekörpers (6) hin stehen. Jede Lamelle (7, 70) weist einen von oben nach unten verlaufenden Ausschnitt (8, 80) mit einer Unterkante (9, 90) auf, der sich vorzugsweise in einem unteren Abschnitt verjüngt, wobei die Sohle des Gerinnekörpers (6) zumindest abschnittsweise entlang der Längsachse (19) des Gerinnekörpers (6) mit einer Deckschicht (13) aus natürlichem Sohlsubstrat versehen ist.

## Beschreibung

Die Erfindung betrifft eine an einem durch eine Barriere in ein Unterwasser und ein Oberwasser getrenntes Gewässer angeordnete Vorrichtung zur Wanderung von Wassertieren zwischen dem Unterwasser und dem Oberwasser, gemäß dem Oberbegriff des Anspruchs 1. Insbesondere betrifft die Erfindung Weiterentwicklungen des bekannten Denil-Fischpasses.

Der Denil-Fischpass ist eine technische Fischwanderhilfe mit langer Tradition. Bereits Anfang des 20. Jahrhunderts wurde die Urform des Denil-Fischpasses errichtet und erzielte hinsichtlich der Lachswanderung gute Ergebnisse. Im Laufe der Zeit wurde dieser Fischpass vor allem im Hinblick auf die Geometrie der im Fischpass eingesetzten Lamellen und die daraus resultierende Strömungshydraulik mehrfach modifiziert, sodass sich aus der Urform etliche Bautypen manifestierten, welche eine weite Verbreitung in den unterschiedlichsten Ländern der Erde genießen.

Das Funktionsprinzip des Denil-Fischpasses beruht darauf, dass die in den Gerinnekörper eingebrachten Lamellen einen Rückstaueffekt des Fließwassers bewirken, welcher die Strömungsgeschwindigkeit entsprechend verlangsamt. Durch diesen Effekt ist die Aufwanderung von Fischen bei deutlich höherem Gefälle und deutlich geringerem Platzbedarf möglich. Allerdings sind zwischen den Denil-Fischpassabschnitten immer wieder Ruhezonen zu schaffen, in welchen die Fische nach der Durchwanderung verweilen können, um wieder zu Kräften zu kommen. Dies ermöglicht auch schwimmschwachen Individuen die Passage von relativ steilen Beckensequenzen.

Ein Einsatzschwerpunkt der bekannten Bauvarianten des Denil-Fischpasses blieb trotz der Modifikationen die Lachswanderung, hierzu wurden an zahlreichen Kraftwerksstandorten gute Aufstiegsraten nachgewiesen. Die bisherigen Bautypen des Denil-Fischpasses werden hinsichtlich der Passierbarkeit von Kleinfischarten und Jungfischstadien kritisch gesehen. Das liegt einerseits an der oftmals unzureichenden Anordnung an Ruhebecken beziehungsweise der ruhebeckenfreien Ausgestaltung des Denil-Fischpasses, für deren Überwindung den Kleinfischarten und Jungfischstadien die Kräfte fehlen. Andererseits haben Kleinfischarten, Jungfischstadien (auch zahlreiche große Cypriniden) sowie Benthalorganismen einen starken Sohlbezug. Technische Fischpässe ohne eingebrachtes Sohlsubstrat sind somit für einen maßgeblichen Artenanteil als kritisch zu sehen und beschränken die Funktionalität einer aquatischen Organismenwanderhilfe auf nur wenige Arten und Altersstadien.

Um Aufstiegshilfen für schwimmschwächere Fische oder Wasserlebewesen mit starkem Sohlbezug zu schaffen, wird der Höhenunterschied vom stromaufwärts der Barriere liegenden Oberwasser zum stromabwärts der Barriere liegenden Unterwasser oft mittels einer großen Anzahl an einzelnen, treppenartig aneinander gereihten Becken überwunden. Solche Vorrichtungen werden üblicherweise als "Fischtreppe" oder "Fischweg" bezeichnet. Das Dokument US 1 621 170 offenbart eine derartige Fischtreppe, die an einem Fluss angeordnet ist und zum Aufwandern von Fischen über ein Querbauwerk, beispielsweise einen Damm, dient.

Bei der bekannten Vorrichtung sind jedoch großflächige bauliche Maßnahmen notwendig, die sowohl ökologische als auch ökonomische Nachteile mit sich bringen. Solche Beckenkaskaden müssen oft aufwändig neben dem Fluss ins Erdreich gegraben und/oder betoniert werden.

Der vorliegenden Erfindung liegt daher die Aufgabe zugrunde, die eingangs erwähnte Vorrichtung zur Wanderung von Wassertieren zwischen dem Unterwasser und dem Oberwasser eines Gewässers dahingehend zu verbessern, dass sie auch für Kleinfischarten, Jungfischstadien und generell für Wasserlebewesen mit starkem Sohlbezug in ihrer Lebensweise überwindbar wird.

Die Erfindung löst diese Aufgabe durch Weiterbildung der eingangs erwähnten Vorrichtung gemäß den kennzeichnenden Merkmalen des Anspruchs 1. Vorteilhafte Ausgestaltungen der Erfindung sind in den Unteransprüchen definiert.

Die erfindungsgemäße Vorrichtung ist an einem Gewässer angeordnet, das durch eine Barriere in ein Unterwasser und ein Oberwasser getrennt ist, und ermöglicht die Wanderung von Wassertieren zwischen dem Unterwasser und dem Oberwasser an der Barriere vorbei. Die Vorrichtung besitzt zumindest einen Gerinnekörper mit einem oberwasserseitigen Ende, das mit dem Oberwasser kommuniziert, und einem unterwasserseitigen Ende, das mit dem Unterwasser kommuniziert. Der Gerinnekörper weist eine zwischen dem oberwasserseitigen Ende und dem unterwasserseitigen Ende verlaufende Längsachse auf. Im Gerinnekörper sind plattenförmige Lamellen quer zur Längsachse des Gerinnekörpers angeordnet, wobei die Lamellen vorzugsweise zusätzlich schräg zum oberwasserseitigen Ende des Gerinnekörpers hin stehen, wobei jede Lamelle einen von oben nach unten verlaufenden Ausschnitt mit einer Unterkante aufweist, der sich vorzugsweise in einem unteren Abschnitt verjüngt.

Die erfindungsgemäße Vorrichtung zur Wanderung von Wassertieren zwischen dem Unterwasser und dem Oberwasser eines Gewässers stellt den für viele Wasserlebewesen zur Wanderung unverzichtbaren Sohlbezug her, indem die Sohle des Gerinnekörpers zumindest abschnittsweise entlang der Längsachse des Gerinnekörpers mit einer Deckschicht aus natürlichem Sohlsubstrat versehen ist. In bevorzugten Ausführungsformen der Erfindung ist die Sohle des Gerinnekörpers über die gesamte Länge entlang der Längsachse des Gerinnekörpers mit einer Deckschicht aus natürlichem Sohlsubstrat versehen. Wahlweise kann die Deckschicht anstatt aus Sohlsubstrat auch aus Bruchmaterial oder eine Mischung aus Sohlsubstrat und Bruchmaterial ausgebildet sein. Darüber hinaus kann natürliches Sohlsubstrat durch eingebrachtes Kantkorn ergänzt oder optional ersetzt werden. Durch die Deckschicht aus Sohlsubstrat oder Bruchmaterial erfolgt eine zusätzliche Reduktion der sohlnahen Wasser-Fließgeschwindigkeiten. Es wird auch das Lückensystem des Materials für die Aufwanderung von Wassertieren erschlossen, wodurch die Aufwanderung von Makrozoobenthos (kieslückenbewohnende Insektenlarven) grundsätzlich ermöglicht wird.

In bevorzugten Ausführungsformen der Erfindung ist die Höhe der Deckschicht über die gesamte Länge des Gerinnekörpers im Wesentlichen konstant. Die Lamellen liegen dabei auf der Deckschicht auf oder sind in die Deckschicht eingebettet. Dabei können den Lamellen gegebenenfalls zumindest auf ihren stromabwärtigen Seiten Rampen vorgesetzt sein, die zumindest bis zur Unterkante des Ausschnitts der Lamellen hoch ragen. In bevorzugten Ausführungsformen der Erfindung sind die Rampen aus Sohlsubstrat oder aus Bruchmaterial aufgebaut.

Die Rampen können so ausgeführt sein, dass sie sich zwischen benachbarten Lamellen über die Länge von der stromaufwärtigen Seite der stromabwärtigen Lamelle zur stromabwärtigen Seite der stromaufwärtigen Lamelle hin erstrecken. Dabei ist in einer Ausführungsform vorgesehen, dass - in Längsachsenrichtung des Gerinnekörpers gesehen - die Höhe der Rampe von der stromaufwärtigen Seite einer Lamelle zur stromabwärtigen Seite der benachbarten stromaufwärtigen Lamelle hin zu.

Um das Sohlsubstrat gegen Austrag und Umlagerung zu sichern, ist dieses vorzugsweise in Gabionen oder Gittern integriert, welche dem System den notwendigen Halt gewähren. Gabionen sind korb- oder käfigartige Gebilde, vorzugsweise aus Metall oder Kunststoff.

Durch die erfindungsgemäße Ausbildung der Vorrichtung zur Wanderung von Wassertieren wird der Wanderkorridor für sämtliche Arten von Wasserlebewesen erschlossen. Um die Integration des Sohlsubstrates in den Fischpass zu optimieren, kann es notwendig sein, bei der Anordnung und der Geometrie der Lamellen von den bisherigen Ausgestaltungen des Denil-Fischpasses abzugehen und stattdessen erfindungsgemäße Ausgestaltungen zu entwickeln, die nachfolgend vorgestellt werden. Alternativ kann eine konventionelle Denil-Lamelle auf die Deckschicht aufgesetzt oder in diese eingebettet werden, wobei hierbei die Sohle des Gerinnekörpers flächig mit Sohlsubstrat oder Bruchmaterial zu versehen ist, und dieses über eine, an der Oberfläche der Deckschicht angeordnete Begrenzungsgabione oder ein Begrenzungsgitter gegen Austrag gesichert wird.

Eine Maßnahme zur Optimierung der Lamellengeometrie besteht darin, den Ausschnitt zu verlängern, indem zumindest ein sich von der Unterkante des Ausschnitts der Lamellen nach unten erstreckender Schlitz ausgebildet ist. Dieser zumindest eine Schlitz kann sich bis zum unteren Ende der Lamelle hin erstrecken, wodurch der Ausschnitt nach unten offen ist. Zur Erzielung einer hohen Steifigkeit der Lamelle ist es zweckmäßig, wenn die Lamellen Querelemente aufweisen, die die Ausschnitte nach oben hin begrenzen.

Aus ökotechnischer Sicht erscheint es sinnvoll, dass bei einer die Wasserlebewesen-Wanderung begünstigenden Rampenform die Querschnittsfläche der Rampen zumindest so groß ist wie die Breite der Schlitze und dass die Oberseite der Rampen ein unteres Ende des Schlitzes überragen. Dadurch können Wasserlebewesen direkt von der Rampe bzw. im Inneren der Rampe durch den Schlitz der Lamelle hindurchwandern und sind dabei vor Prädatoren geschützt. Ebenso ist es für das Wanderungsverhalten auch als günstig anzusehen, wenn eine Breite der Oberseite der Rampen kleiner ist als die Breite der Ausschnitte der Lamellen.

Vorteilhafte, miteinander kombinierbare Ausgestaltungsbeispiele der Erfindung werden nachfolgend anhand der Zeichnungen näher erläutert.
Figur 1 zeigt in einem Längsschnitt eine erfindungsgemäße Vorrichtung zur Wanderung von Wassertieren in einer ersten Ausgestaltung.
Figur 2A zeigt in einem Querschnitt einen Teil einer erfindungsgemäßen Vorrichtung zur Wanderung von Wassertieren gemäß der ersten Ausgestaltung, wobei eine dargestellte Lamelle ähnlich einer konventionellen Denil-Lamelle ausgebildet ist.
Figur 2B zeigt in einem Längsschnitt einen Teil einer erfindungsgemäßen Vorrichtung zur Wanderung von Wassertieren gemäß der ersten Ausgestaltung.
Figur 3 zeigt in einem Längsschnitt eine erfindungsgemäße Vorrichtung zur Wanderung von Wassertieren in einer zweiten Ausgestaltung.
Figur 4 zeigt die Vorrichtung von Figur 3 anhand eines Querschnittes C-C.
Figur 5 zeigt eine Lamelle der erfindungsgemäßen Vorrichtung, welche Lamelle gemäß einer neuen, erfinderischen Variante ausgebildet ist.

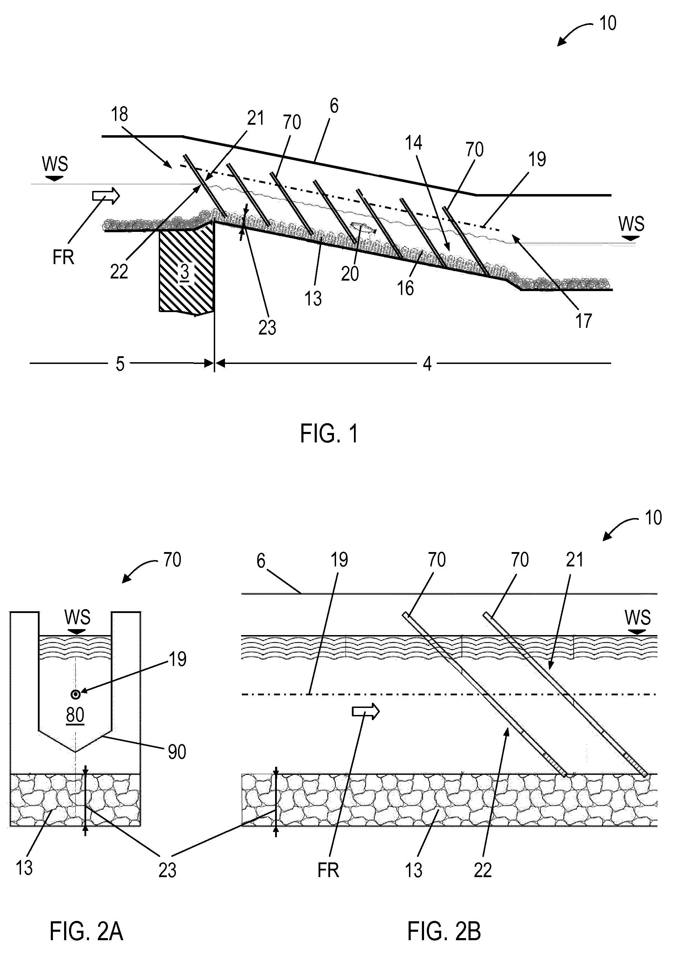

Figuren 1, 2A und 2B zeigen jeweils in schematischer Darstellung eine Vorrichtung 10 zur Wanderung von Wassertieren 20 gemäß einer ersten erfindungsgemäßen Ausgestaltung. Mittels der Vorrichtung 10 können Wassertiere 20 eine Barriere 3 in einem Gewässer überwinden und von einem Unterwasser 4 in ein Oberwasser 5, oder umgekehrt, wandern. Handelt es sich bei dem Gewässer um ein fließendes Gewässer, beispielsweise einen Fluss, so ist die Vorrichtung 10 im Wesentlichen entlang einer Flussrichtung FR angeordnet.

Die Vorrichtung 10 umfasst einen Gerinnekörper 6 mit einem oberwasserseitigen Ende 18, das mit dem Oberwasser 5 kommuniziert, und mit einem unterwasserseitigen Ende 17, das mit dem Unterwasser 4 kommuniziert. Der Gerinnekörper 6 erstreckt sich entlang einer Längsachse 19. Folglich fließt das Wasser mit einem Wasserspiegel WS vom Oberwasser 5 im Wesentlichen entlang der Längsachse 19 ins Unterwasser 4.

Im Gerinnekörper 6 sind in im Wesentlichen gleichbleibenden Abständen quer zur Längsachse 19 Lamellen 70 angeordnet. Diese Lamellen 70 bewirken einen Rückstaueffekt des Fließwassers, welcher die Strömungsgeschwindigkeit entsprechend verlangsamt und so den Wassertieren 20 den Aufstieg ermöglicht. Das das Strömungsprofil innerhalb des Gerinnekörpers 6 von diesen Lamellen 70 gebildet wird, ist deren Ausführung von entscheidender Bedeutung für die Funktionsweise der Vorrichtung 10. Die Lamellen 70 sind demnach schräg stehend, in Richtung des oberwasserseitigen Endes 18 des Gerinnekörpers 6 eingebracht.

Die Sohle des Gerinnekörpers 6 ist abschnittsweise, bevorzugt jedoch über die gesamte Länge entlang der Längsachse 19 des Gerinnekörpers 6, mit einer Deckschicht 13 aus natürlichem Sohlsubstrat versehen. Dabei ist das Sohlsubstrat vorzugsweise über die gesamte Breite der Sohle des Gerinnekörpers 6 eingebracht, wobei sich die Breite orthogonal quer zur Längsachse 19 des Gerinnekörpers 6 erstreckt. Optional kann das Sohlsubstrat entlang der Breite nur teilweise, beispielsweise im Ausmaß der Breite der Ausschnitte 80 der Lamellen, eingebracht sein. Die Höhe 23 der Deckschicht 13 aus natürlichem Sohlsubstrat ist vorzugsweise konstant. Das eingebrachte Sohlsubstrat sowie die Höhe 23 der Deckschicht 13 entspricht bevorzugt der Geologie und dem Schichtaufbau der natürlich vorkommenden Sohle des Gewässers. Optional ist die Höhe 23 der Deckschicht 13 an die Strömungsverhältnisse des Gewässers und/oder an konstruktive Voraussetzungen, beispielsweise das Gesamtgewicht der Deckschicht 13, angepasst.

Optional kann die Sohle des Gerinnekörpers 6 auch mit einer Deckschicht 13 aus Bruchmaterial, oder mit einer Mischung aus Sohlsubstrat und Bruchmaterial versehen sein. Zusätzlich kann Kantkorn mit in das Sohlsubstrat oder das Bruchmaterial eingebracht werden. Kantkorn ist ein verschleißfester, gebrochener Schotter, der aus dem Steinbruch direkt nach der Sprengung des Felsens in das Haufwerk gewonnen wird. Eingebrachtes Kantkorn kann die sohlnahe Fließgeschwindigkeit des Gewässers weiter herabsenken.

Durch Einbringen des Sohlsubstrats oder des Bruchmaterials in die Vorrichtung 10, insbesondere in den Gerinnekörper 6, wird den Wassertieren 20 ein fortlaufender Kieslückenraum generiert, wodurch die Wahrscheinlichkeit einer erfolgreichen Wanderung erhöht wird. Für Wasserlebewesen mit starkem Sohlbezug wird die Barriere 3 hierdurch erst generell überwindbar. Das Sohlsubstrat ist mittels Gabionen 16, das sind korb- oder käfigartige Gebilde, meist aus Metall, oder Gittern gegen Austrag und Umlagerung gesichert. Durch das Einbringen Bruchmaterial oder Kantkorn kann der Aufbau der Deckschicht 13 gelockert werden, wodurch die Aufwanderung von Makrozoobenthos (kieslückenbewohnende Insektenlarven) erschlossen werden kann.

Die Lamellen 70 liegen auf der Deckschicht 13 auf, wie in Figuren 2A und 2B dargestellt, oder sind bis zu einer Einbettungstiefe in die Deckschicht 13 eingebettet. Die Einbettungstiefe kann hierbei variieren und maximal die Höhe 23 der Deckschicht 13 betragen, das heißt bis zur Sohle des Gerinnekörpers 6 reichen. Dabei können die Lamellen 70 an den Gabionen 16 befestigt sein. Liegen die Lamellen 70 direkt auf der Sohle des Gerinnekörpers 6 auf, können sie dort befestigt sein. Die Lamellen 70 können jedenfalls an Seitenwänden des Gerinnekörpers 6 befestigt sein. des Figur 1 zeigt sowohl vier Lamellen 70, welche dem oberwasserseitigen Ende 18 am nächsten liegen, die in die Deckschicht 13 eingebettet sind, als auch drei Lamellen 70, welche dem unterwasserseitigen Ende 17 am nächsten liegen, die auf der Sohle des Gerinnekörpers 6 aufliegen.

Jede Lamelle 70 weist einen, von oben nach unten verlaufenden Ausschnitt 80 mit einer Unterkante 90 auf, durch den einerseits das Fließwasser durchgeleitet wird, und andererseits die Wassertiere 20 auf- beziehungsweise abwandern. In einem unteren Abschnitt verjüngen sich die Ausschnitte 80. Eine derartige Lamelle 70, die ähnlich oder identisch mit einer konventionellen Denil-Lamelle ausgebildet ist, ist in Figur 2A dargestellt. Sind die Lamellen 70 in die Deckschicht 13 eingebettet, kann die Deckschicht 13 bis an die Unterkante 90 des Ausschnitts 80 reichen.

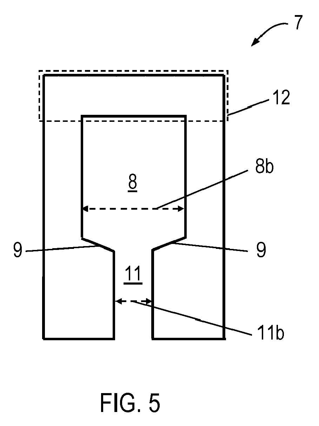

Die Vorrichtung 10 zur Wanderung von Wassertieren 20 gemäß der ersten erfindungsgemäßen Ausgestaltung kann auch neuartig ausgebildete Lamellen 7, die später beschrieben werden und in Figur 5 dargestellt sind, aufweisen.

Den Lamellen 70 sind auf ihren stromabwärtigen Seiten 21 optional Rampen vorgesetzt. Die Rampen können dabei im Wesentlichen jeweils bis zur Unterkante 90 des Ausschnitts 80 der Lamelle 70 hochragen, wobei die Höhe der Rampen, entlang der Längsachse 19 des Gerinnekörpers 6, von der stromaufwärtigen Seite 22 einer Lamelle 70 zur stromabwärtigen Seite 21 der benachbarten stromaufwärtigen Lamelle 70 hin zunimmt. In bevorzugten Ausführungsformen der Erfindung füllen die Rampen einen Zwischenraum 14 zwischen benachbarten Lamellen 70 vollkommen aus. Das bedeutet, dass sich die Rampen zwischen benachbarten Lamellen 70 über die Länge von der stromaufwärtigen Seite 22 der stromabwärtigen Lamelle 70 zur stromabwärtigen Seite 21 der stromaufwärtigen Lamelle 70 erstrecken.

Die Gestaltung der Rampen erfolgt derart, dass diese jeweils mit einer Deckschicht 13 aus natürlichem Sohlsubstrat versehen sind, oder aber komplett aus dieser Deckschicht 13 aus natürlichem Sohlsubstrat aufgebaut sind. Dabei entspricht das eingebrachte natürliche Sohlsubstrat der Geologie und dem Schichtaufbau der natürlich vorkommenden Sohle des Gewässers. Die Rampen, beziehungsweise das Sohlsubstrat, sind mittels Gabionen 16, das sind korb- oder käfigartige Gebilde, meist aus Metall, oder Gittern gegen Austrag und Umlagerung gesichert.

Optional kann die Gestaltung der Rampen auch derart erfolgen, dass diese jeweils mit einer Deckschicht 13 aus Bruchmaterial, oder mit einer Mischung aus Sohlsubstrat und Bruchmaterial versehen sein. Zusätzlich kann Kantkorn mit in das Sohlsubstrat oder das Bruchmaterial eingebracht werden.

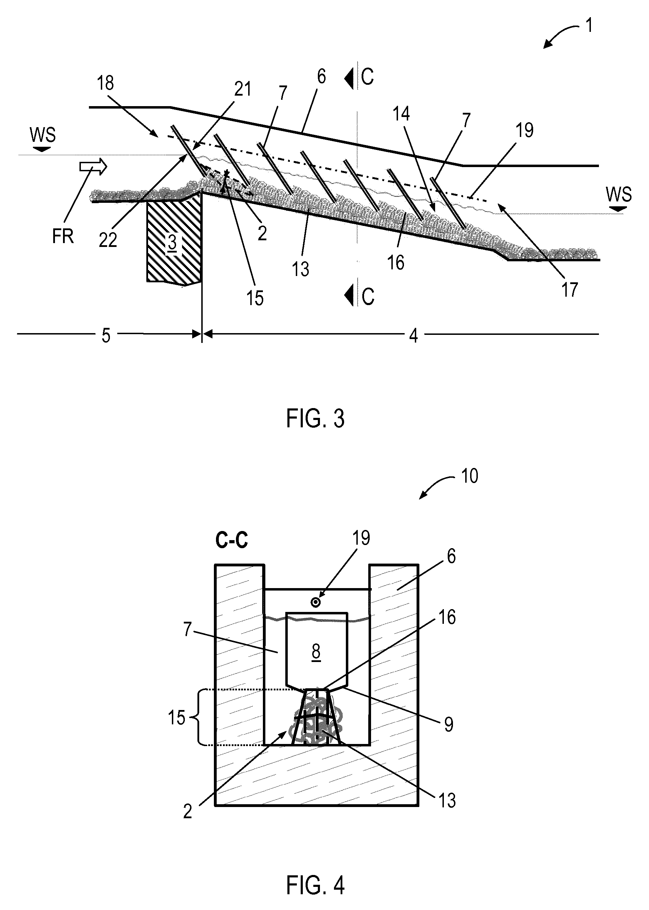

Figuren 3 und 4 zeigen in schematischer Darstellung eine Vorrichtung 1 zur Wanderung von Wassertieren 20 gemäß einer zweiten erfindungsgemäßen Ausgestaltung.
Diese Vorrichtung 1 entspricht großteils der Vorrichtung 10 gemäß der ersten erfindungsgemäßen Ausgestaltung. Den Lamellen 7 sind auf ihren stromabwärtigen Seiten 21 Rampen 2 vorgesetzt. Die Rampen 2 können dabei im Wesentlichen jeweils bis zur Unterkante 9 des Ausschnitts 8 der Lamelle 7 hochragen, wobei die Höhe 15 der Rampen 2, entlang der Längsachse 19 des Gerinnekörpers 6, von der stromaufwärtigen Seite 22 einer Lamelle 70 zur stromabwärtigen Seite 21 der benachbarten stromaufwärtigen Lamelle 70 hin zunimmt. Die Rampen 2 bilden folglich eine sägezahnartige Abfolge aus. Durch die erfindungsgemäße Form der Rampen 2 kann die Wahrscheinlichkeit einer erfolgreichen Wanderung für sohlnahe Wanderer erhöht werden. Form und Anstieg der Rampen 2 sind entsprechend an die Strömungsverhältnisse innerhalb des Gerinnekörpers 6 angepasst.

Neben den konventionellen, bekannten Lamellen 70 kann die Vorrichtung 1 gemäß der zweiten Ausgestaltung auch neuartig ausgebildete Lamellen 7 gemäß Figur 5 aufweisen. Bei diesen Lamellen 7 ist ein, sich von einer Unterkante 9 eines Ausschnitts 8 nach unten erstreckender Schlitz 11 ausgebildet. Der Schlitz 11 erstreckt sich dabei bis zum unteren Ende der Lamelle 7. Die Rampen 2 überragen mit ihrer Oberseite ein unteres Ende des Schlitzes 11. Die Querschnittsfläche der Rampen 2 ist etwas größer als die Breite 11b der Schlitze 11, wobei die Breite der Oberseite der Rampen 2 kleiner ist als die Breite 8b der Ausschnitte 8 der Lamellen 7. Um eine ausreichende Stabilität der Lamellen 7 zu gewährleisten, weisen die Lamellen 7 oben an ihren Ausschnitten 8 Querelemente 12 auf. Durch die entsprechend ausgebildeten Lamellen 7, kann das Strömungsverhalten innerhalb des Gerinnekörpers 6 vorteilhaft beeinflusst werden.

Durch entsprechenden Aufbau der Deckschicht 13 innerhalb der Gabionen 16 der Rampen 2, lässt sich beispielsweise eine Leitströmung durch die Schlitze 11 und die Rampen 2 unterhalb der Ausschnitte 8 erzeugen. Hierdurch kann die Wahrscheinlichkeit einer erfolgreichen Wanderung für sohlnahe Wanderer erhöht werden. Weiters kann das Lückensystem des Sohlsubstrats oder des Bruchmaterials für die Aufwanderung von Makrozoobenthos (kieslückenbewohnende Insektenlarven) erschlossen werden. Der Prädationsdruck innerhalb der Vorrichtung 1 sinkt, da Kleinfischarten, Jungfischstadien und sohlnahen Wanderern Möglichkeiten zum Unterschlupf geschaffen werden.

Das Gewässer, die topografischen Gegebenheiten oder die Barriere 3 können bedingen, dass das oberwasserseitige Ende 18 an ein Ruhebecken oder eine Oberwasser-Beckenkaskade mit ansteigenden Beckenwasserspiegeln angeschlossen ist, und/oder dass das unterwasserseitige Ende 17 an ein Ruhebecken oder an eine Unterwasser-Beckenkaskade mit abfallenden Beckenwasserspiegeln angeschlossen ist. Weiters kann der Gerinnekörper 6 aus zwei Teilen mit einem zwischengeschalteten Ruhebecken ausgebildet sein.

Es kann erwähnt werden, dass bei einer erfindungsgemäßen Vorrichtung 1, 10 der Gerinnekörper 6 auch andersartig ausgebildet sein kann. Beispielsweise kann der Gerinnekörper 6 einen kreisförmigen oder elliptischen Querschnitt aufweisen, um besonderen Arten von Wassertieren 20, konstruktiven Vorstellungen oder topografischen Gegebenheiten des Gewässers oder der Gewässerlandschaft Rechnung zu tragen. Ebenso kann die geometrische Form der Lamellen 7, 70 und der Ausschnitte 8, 80 jeweils komplex und/oder vieleckig sein, und ebenso die Anordnung der Lamellen 7, 70 auf oder in der Deckschicht 13 entsprechend variiert werden.

Der strukturelle Aufbau der Deckschicht 13 kann sich aus allen Arten natürlicher und künstlicher Materialien, wie beispielsweise Sohlsubstrat, Bruchmaterial, Kantkorn, Schotter, Gestein, Holz, Keramik, Metall, Textil, Beton, Sand, Kunststoff oder Ähnliches, zusammensetzen, sowie alle möglichen Mischverhältnisse solcher, zuvor genannter Materialien aufweisen. Innerhalb der Deckschicht 13 können verschiedene Materialien und Materialmischungen schichtweise, das heißt in einer vorgegebenen Schichtabfolge, und/oder durchmischt eingebracht sein.

Die Deckschicht 13 kann gegen Austrag und Umlagerung mittels Gabionen 16, Gittern, oder andersartigen korb- oder käfigartigen Gebilden aus Metall, Holz, Fasergeflecht, Textil, Kunststoff oder Ähnlichem gesichert sein. Alternativ kann das Material der Deckschicht 13 in eine Vertiefung in der Sohle des Gerinnekörpers, beispielsweise eine betonierte beckenartige Vertiefung, eingebracht werden, und mittels eines Gitters oder Netzes gegen Austrag und Umlagerung gesichert sein.

Weiters ist zu erwähnen, dass die erfindungsgemäße Vorrichtung 1, 10 auch an nicht fließenden Gewässern sowohl für aufwandernde als auch für abwandernde Wassertiere 20 genutzt werden kann.

## Patentansprüche

1. An einem durch eine Barriere (3) in ein Unterwasser (4) und ein Oberwasser (5) getrenntes Gewässer angeordnete Vorrichtung (1, 10) zur Wanderung von Wassertieren (20) zwischen dem Unterwasser (4) und dem Oberwasser (5), wobei die Vorrichtung (1, 10) zumindest einen Gerinnekörper (6) mit einem oberwasserseitigen Ende (18), das mit dem Oberwasser (5) kommuniziert, und einem unterwasserseitigen Ende (17), das mit dem Unterwasser (4) kommuniziert, aufweist, wodurch Wasser vom Oberwasser (5) durch den Gerinnekörper (6) zum Unterwasser (4) fließt, wobei der Gerinnekörper (6) eine zwischen dem oberwasserseitigen Ende (18) und dem unterwasserseitigen Ende (17) verlaufende Längsachse (19) aufweist, wobei im Gerinnekörper (6) plattenförmige Lamellen (7, 70) quer zur Längsachse (19) des Gerinnekörpers (6) angeordnet sind, wobei die Lamellen (7, 70) vorzugsweise zusätzlich schräg zum oberwasserseitigen Ende (18) des Gerinnekörpers (6) hin stehen, wobei jede Lamelle (7, 70) einen von oben nach unten verlaufenden Ausschnitt (8, 80) mit einer Unterkante (9, 90) aufweist, der sich vorzugsweise in einem unteren Abschnitt verjüngt, **dadurch gekennzeichnet, dass** die Sohle des Gerinnekörpers (6) zumindest abschnittsweise entlang der Längsachse (19) des Gerinnekörpers (6) mit einer Deckschicht (13) aus natürlichem Sohlsubstrat versehen ist.

2. Vorrichtung (1, 10) nach Anspruch 1, **dadurch gekennzeichnet, dass** die Sohle des Gerinnekörpers (6) über die gesamte Länge entlang der Längsachse (19) des Gerinnekörpers (6) mit einer Deckschicht (13) aus natürlichem Sohlsubstrat versehen ist.

3. Vorrichtung (1, 10) nach Anspruch 1 oder 2, **dadurch gekennzeichnet, dass** die Deckschicht (13), anstatt aus Sohlsubstrat, aus Bruchmaterial oder einer Mischung aus Sohlsubstrat (13) und Bruchmaterial gebildet ist.

4. Vorrichtung (1, 10) nach einem der Ansprüche 1 bis 3, **dadurch gekennzeichnet, dass** die Höhe (23) der Deckschicht (13) über die gesamte Länge entlang der Längsachse (19) des Gerinnekörpers (6) im Wesentlichen konstant ist.

5. Vorrichtung (1, 10) nach einem der Ansprüche 1 bis 4, **dadurch gekennzeichnet, dass** die Lamellen (7, 70) auf der Deckschicht (13) aufliegen oder im Ausmaß einer Einbettungstiefe in die Deckschicht (13) eingebettet sind.

6. Vorrichtung (1, 10) nach Anspruch 5, **dadurch gekennzeichnet, dass** das Ausmaß der Einbettungstiefe der Höhe (23) der Deckschicht (13) entspricht.

7. Vorrichtung (1, 10) nach einem der Ansprüche 1 bis 6, **dadurch gekennzeichnet, dass** den Lamellen (7, 70) zumindest auf ihren stromabwärtigen Seiten (21) Rampen (2) vorgesetzt sind, die zumindest bis zum Ausschnitt (8, 80) der Lamellen (7, 70) hoch ragen.

8. Vorrichtung (1, 10) nach Anspruch 7, **dadurch gekennzeichnet, dass** sich die Rampen (2) zwischen benachbarten Lamellen (7, 70) über die Länge von der stromaufwärtigen Seite (22) der stromabwärtigen Lamelle (7, 70) zur stromabwärtigen Seite (21) der stromaufwärtigen Lamelle (7, 70) hin erstrecken.

9. Vorrichtung (1) nach Anspruch 7 oder 8, **dadurch gekennzeichnet, dass** - in Richtung der Längsachse (19) des Gerinnekörpers (6) gesehen- die Höhe (15) der Rampe (2) von der stromaufwärtigen Seite (22) einer Lamelle (7, 70) zur stromabwärtigen Seite (21) der benachbarten stromaufwärtigen Lamelle (7, 70) hin zunimmt.

10. Vorrichtung (1, 10) nach einem der Ansprüche 7 bis 9, **dadurch gekennzeichnet, dass** die Rampen (2) aus Sohlsubstrat und/oder aus Bruchmaterial aufgebaut sind.

11. Vorrichtung (1, 10) nach einem der Ansprüche 1 bis 10, **dadurch gekennzeichnet, dass** das Sohlsubstrat in Gabionen (16) oder Gittern angeordnet ist, wobei die Gabionen (16) oder die Gitter die Form der räumlichen Anordnung der Deckschicht (13) und der Rampen (2) definieren.

12. Vorrichtung (1, 10) nach einem der Ansprüche 1 bis 11, **dadurch gekennzeichnet, dass** der Ausschnitt (8) der Lamellen (7) durch zumindest einen sich von seiner Unterkante (9) nach unten erstreckenden Schlitz (11) verlängert ist.

13. Vorrichtung (1, 10) nach Anspruch 12, **dadurch gekennzeichnet, dass** sich der Schlitz (11) bis zum unteren Ende der Lamelle (7) hin erstreckt.

14. Vorrichtung (1, 10) nach Anspruch 12 oder 13, **dadurch gekennzeichnet, dass** die Querschnittsfläche der Rampen (2) zumindest so groß ist wie die Breite (11b) der Schlitze (11) und die Oberseite der Rampen (2) ein unteres Ende des Schlitzes (11) überragen.

15. Vorrichtung (1, 10) nach einem der Ansprüche 1 bis 14, **dadurch gekennzeichnet, dass** die Lamellen (7) Querelemente (12) aufweisen, die die Ausschnitte (8) nach oben hin begrenzen.
